# EUROPÄISCHE PATENTSCHRIFT

(11) **EP 0 714 338 B1**
(45) Veröffentlichungstag und Bekanntmachung des Hinweises auf die Patenterteilung: **07.05.1997**
(21) Anmeldenummer: 94926842.9
(22) Anmeldetag: 16.08.1994
(51) Int. Cl.: B24B 5/42, B23B 31/40, B23B 31/22, B23Q 3/00, B24B 41/06

(54) **VERFAHREN UND VORRICHTUNG ZUM SCHLEIFEN EINER KURBELWELLE**
CRANKSHAFT GRINDING PROCESS AND DEVICE
PROCEDE ET DISPOSITIF PERMETTANT DE RECTIFIER UN VILEBREQUIN

(30) Priorität: 18.08.1993 DE 4327807
(43) Veröffentlichungstag der Anmeldung: 05.06.1996
(73) Patentinhaber: Junker, Erwin, D-77787 Nordrach (DE)
(72) Erfinder: Junker, Erwin, D-77787 Nordrach (DE)
(74) Vertreter: Rost, Jürgen, Dipl.-Ing.
(86) Internationale Anmeldenummer: EP9402729
(87) Internationale Veröffentlichungsnummer: WO9505265

(56) Entgegenhaltungen:
- EP-A- 0 170 764
- DE-A- 660 950
- DE-A- 1 084 167
- DE-A- 1 258 753
- US-A- 3 059 514
- US-A- 4 932 642

## Beschreibung

Die Erfindung betrifft ein Verfahren und eine Vorrichtung zum Schleifen einer Kurbelwelle.

Das Schleifen von Kurbelwellen erfolgt bei bekannten Verfahren in einer Vielzahl von Arbeitsschritten. In einem ersten Arbeitsschritt werden die Hauptlager und in einem zweiten Arbeitsschritt werden die Hublager der Kurbelwelle vorgeschliffen. Die Hauptlager werden in einem dritten Arbeitsschritt fertiggeschliffen. Im anschließenden vierten Arbeitsschritt werden die Paßlager und die Zapfen der Kurbelwellen geschliffen. In weiteren Arbeitsschritten werden die Hublager fertiggeschliffen (fünfter Arbeitsschritt). In einem sechsten Arbeitsschritt werden die Kurbelwellenenden bearbeitet und in einem abschließenden siebten Arbeitsschritt werden die Flansche der Kurbelwellen geschliffen.

Dabei ist die Kurbelwelle bei als solche bekannten Vorrichtungen an ihren Enden zwischen Werkstück-Spindelstock und Reitstock mittels Spannfutter oder mittels Spannzangen sowie Spitzen eingespannt. Eine derartige Einspannung der Kurbelwelle verleiht ihr zwar auch bei hohen Rotationsgeschwindigkeiten die erforderliche sichere Lagerung,ist allerdings mit dem gravierenden Nachteil verbunden, daß die Kurbelwelle axialen Druckkräften ausgesetzt ist, die zu ihrer Deformation im elastischen Bereich fuhren. Dies führt zwar nicht immer zu einer Beschädigung der Kurbelwelle, jedoch durch die elastische Verformung treten Qualitäts- und Genauigkeitsprobleme auf, da nach dem Entspannen die Kurbelwelle elastisch zurückfedert. Ein weiterer Nachteil dieser Vorrichtungen besteht darin, daß das Spannfutter oder die Spannzangen zu schleifende Teile der Kurbelwelle, insbesondere Flansche und Paßlager abdecken. Um auch diese Teile der Kurbelwelle schleifen zu können, sind das Spannfutter bzw. die Spannzangen von der Kurbelwelle zu lösen, und diese ist aus der Vorrichtung zu entfernen. Schließlich sind die zu schleifenden Kurbelwellenteile in einem separaten Arbeitsgang zu schleifen. Das bekannte Verfahren zum Schleifen von Kurbelwellen ist damit außerordentlich zeit- und kostenaufwendig.

In der DE-PS 727 220 ist eine Einspannvorrichtung für Kurbelwellenschleifmaschinen beschrieben, bei welcher die Kurbelwellenzapfen axial druckfrei in auf einem schwenkbaren Segment sitzenden Einspannwangen eingespannt sind. Dieses Segment ist um einen Zapfen schwenkbar, der von einer Planscheibenmitte um Hubgröße entfernt ist. Darüber hinaus sind dort keine weiteren Angaben hinsichtlich Kurbelwellenlagerung vorhanden.

Die EP-A-0 170 764 beschreibt ein Verfahren zum Schleifen einer Kurbelwelle, wobei die Kurbelwelle zwischen Aufnahmespitzen des Werkstückspindelstockes und Reitstockes einer Schleifmaschine eingespannt wird. Dabei werden alle Lager, Hublager und Zapfen der Kurbelwelle in einer Aufspannung unter Verwendung zweier entsprechend konturierter Schleifscheiben fertiggeschliffen Zur zentrischen Lagerung der Kurbelwelle weisen der Werkstückspindelstock und der Reibstock je eine Aufnahmespitze auf, die in eine Zentrierbohrung an jedem Ende der Kurbelwelle eingreifen.

Demzufolge besteht die Aufgabe der Erfindung darin, ein Verfahren gemäß Oberbegriff des Anspruchs 1 und eine Vorrichtung der im Oberbegriff des Anspruches 2 genannten Art anzugeben, womit ein Schleifen der gesamten Kurbelwelle in einer Aufspannung ohne oder ohne wesentliche Axialkräfte ermöglicht wird.

Diese Aufgabe wird erfindungsgemäß bei einem Verfahren mit den Merkmalen des Patentanspruchs 1 gelöst.

Diese Aufgabe wird weiterhin mit einer Vorrichtung mit den Merkmalen nach Anspruch 2 gelöst.

Zweckmäßige Weiterbildungen der Vorrichtung gemäß der Erfindung ergeben sich aus den Unteransprüchen.

Die erfindungsgemäße Vorrichtung ist mit einer Mehrzahl von Vorteilen verbunden. Ein wesentlicher Vorteil besteht darin, daß die zu schleifende Kurbelwelle zentrisch so zwischen Spitzen eingespannt werden kann, daß der sie sich in axialer Richtung nicht verformt. Dieser Vorteil wird durch den weiteren Vorteil ergänzt, daß die Kurbelwelle in der axialdruckfreien bzw. mit einem definierten leichten malen Zug vorgesehenen Einspannung mit ihrer gesammten Oberfläche für das wenigstens zwei separat gelagerte und entsprechend konturierte Schleifscheiben umfassende Schleifwerkzeug zugänglich ist.

Die Kurbelwelle ist einerseits mit definiertem leichtem axialen Zug und andererseits so fest in die Vorrichtung eingespannt, daß auch bei hohen Rotationsgeschwindigkeiten ein sicherer Halt gewährleistet wird. Dies gilt auch für Kurbelwellen mit exzentrischen Teilen beliebiger Masse. Durch die erfindungsgemäß vorgesehene, unter definiertem leichtem axialen Zug erfolgende und somit axial druckfreie Einspannung ist die Kurbelwelle allen zu beschleifenden Teilen für das Schleifwerkzeug zugänglich. Somit kann die Kurbelwelle in einer einzigen Aufspannung fertiggeschliffen werden.

Auch ist die erfindungsgemäße Vorrichtung technisch nicht aufwendig und leicht zu warten.

Weitere Vorteile ergeben sich aus der nachfolgenden Erläuterung der Erfindung an Ausführungsbeispielen an Hand der beigefügten Zeichnung.

In der Zeichnung zeigen:
- Fig. 1: eine Vorrichtung mit einer eingespannter Kurbelwelle;
- Fig. 2: einen Teilschnitt der Vorrichtung nach Fig. 1 mit eingespannter Kurbelweile und einem Spannelement;
- Fig. 3: eine Teilschnittansicht einer weiteren Ausführungsform der Vorrichtung nach Fig. 1 mit eingespannter Kurbelwelle;
- Fig. 4: schematisch eine Vorrichtung mit eingespannter Kurbelwelle, die auf der linken Seite axial mittels eines formschlüssig an einem Zapfen der Kurbelwelle angreifenden Befestigungselementes in Richtung zur werkstückspindelstockseitigen Spitze gezogen wird;
- Fig. 5: eine Teilschnittansicht der Vorrichtung mit einem externen Befestigungselement und
- Fig. 6a bis d: eine Teilansicht der Vorrichtung mit eingespannter Kurbelwelle, mit Verbindungsstiften und Schleifwerkzeug, wobei die Lagen der verwendeten Schleifscheiben in verschiedenen Bearbeitungsstufen angedeutet sind.

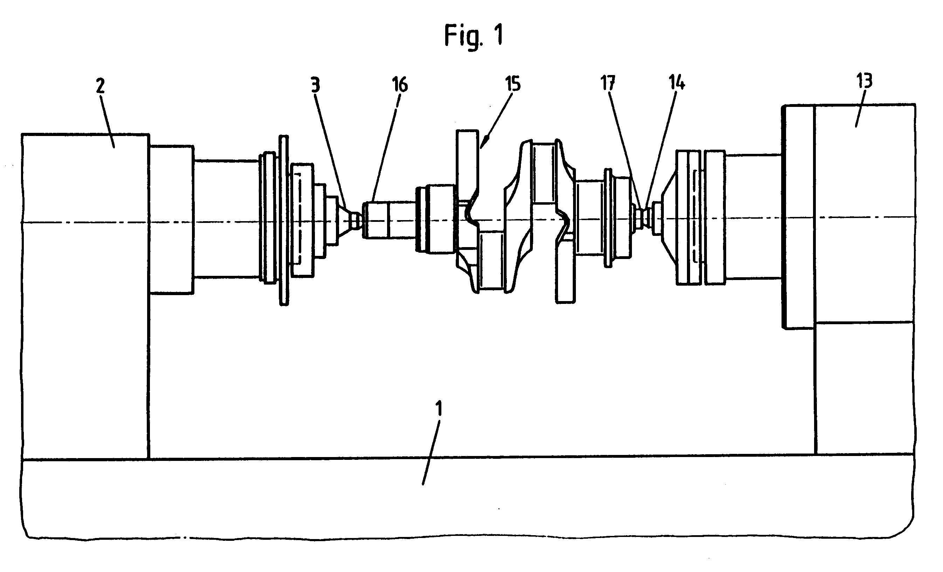

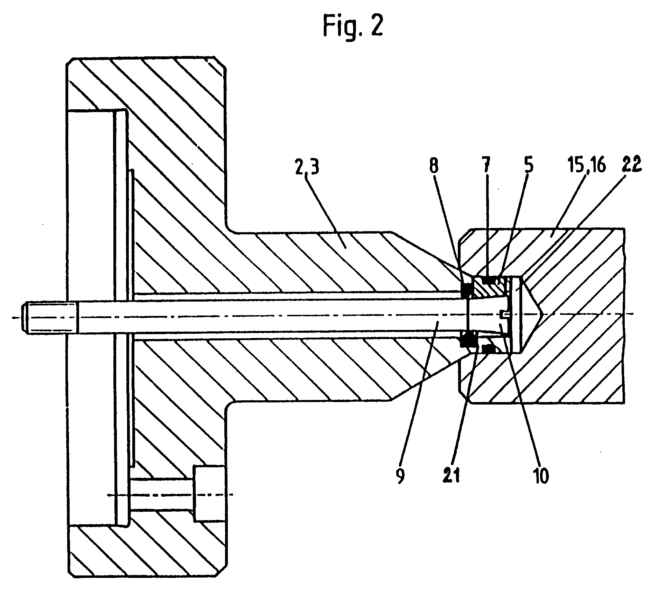

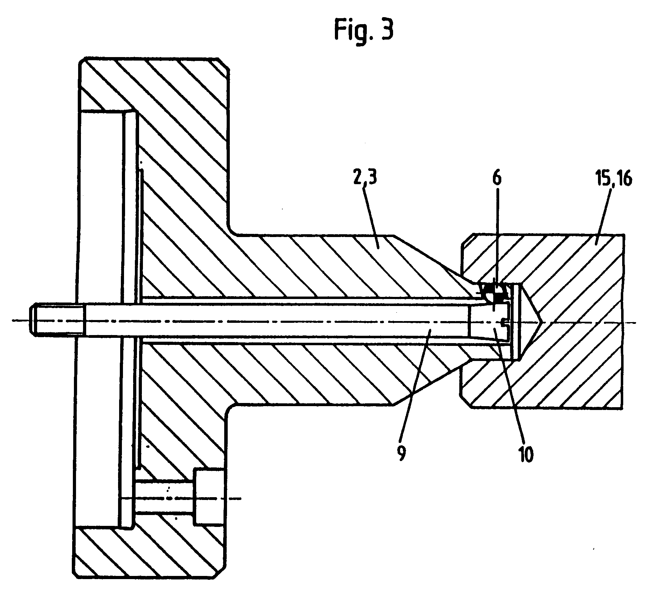

Eine in Fig. 1 dargestellte Schleifmaschine besteht aus einem Tisch 1, einem auf dem Tisch 1 angeordneten Werkstück-Spindelstock 2 und einem ebenfalls auf dem Tisch 1 angeordneten Reitstock 13. Werkstück-Spindelstock 2 und Reitstock 13 weisen in an sich bekannter Weise beispielsweise von einem (nicht dargestellten) Hydraulikzylinder horizontal verschiebbare Pinolen auf. An dem Werkstück-Spindelstock 2 ist eine Spitze 3 angeordnet, und an der reitstockseitigen Pinole ist eine Spitze 14 angeordnet. Der konstruktive Aufbau der Spitzen 3 bzw. 14 ist für bevorzugte Ausführungsformen in Fig. 2 und 3 dargestellt und unten beschrieben. Die Kurbelwelle 15 ist an ihrem spindelstockseitigen Ende 16 in die Spitze 3 eingespannt, während das reitstockseitige Ende der Kurbelwelle 15 in die Spitze 14 eingespannt ist. Die gesamte zu beschleifende Oberfläche der Kurbelwelle 15 ist somit für eingesetzte Schleifscheiben zugänglich. Dabei ist die Kurbelwelle zwischen den Spitzen 3 und 14 axialdruckfrei oder mit definiertem leichtem axialen Zug eingespannt und fixiert. Ein axialer Zug wird dann von einem Hydraulikzylinder, der die Pinole verschiebt, aufgebracht.

Fig. 2 zeigt die konstruktive Ausgestaltung der Spitze 3. Die Spitze 14 kann identisch aufgebaut sein. Die Spitze 3 des Werkstück-Spindelstocks 2 ist in eine korrespondierende mittige Bohrung 22 des spindelstockseitigen Endes 16 der Kurbelwelle 15 eingesetzt. Die Spitze 3 weist einen zylinderförmigen Längsdurchgang auf, in dem eine mit einem Spannelement 4 zusammenwirkende Zugstange 9 angeordnet ist. Dabei besteht das Spannelement 4 aus mindestens drei am Umfang des in das jeweilige Kurbelwellenende eingreifenden Abschnittes der Spitze verteilten Spannkörpern 5, die symmetrisch angeordnet, in entsprechenden Nuten des Spitzenumfanges eingelegt und dort festgehalten sind. Die Zugstange 9 ist schwimmend gelagert und axial mit Hilfe eines (nicht dargestellten) Hydraulikzylinders verschiebbar. Die Zugstange 9 ist im Bereich des Spannelements 4 kegelstumpfförmig bzw. konisch ausgebildet und verjüngt sich zu der dem freien Ende einer Spitze 21 entgegengesetzten Richtung.

Das Spannelement 4 besteht bei der in Fig. 2 dargestellten Ausführungsform aus Spannbacken 5, die bei einer axialen Bewegung des konischen Kopfteils der Stange 9 weg von dem spindelstockseitigen Ende 16 der Kurbelwelle 15 an der Bohrungswand der Kurbelwelle 15 angreifen und letztere festspannen. Der von der Zugstange 9 auf die Spannbacken 5 und damit auf die Kurbelwelle 15 im Bereich ihrer mit der Spitze 3 korrespondierenden Ausnehmung ausgeübte Druck läßt sich durch die horizontale Positionierung der Zugstange 9 (in der Figur nach links oder nach rechts) regulieren. Die Spannbacken 5 weisen an ihrem Außenumfang Ausnehmungen zur Aufnahme eines Spannrings 7 auf. Der Spannring 7 sowie ein weiterer Spannring 8 halten die Spannbacken 5 in der Spitze 3 und verhindern eine horizontale Verschiebung der Spannbacken; die Spannbacken sind lediglich vertikal, also senkrecht zur Kurbelwellenachse verschiebbar. Diese Spannringe sind vorzugsweise als Gummiring ausgeführt.

Aus Fig. 2 ergibt sich, daß die Kurbelwelle 15 durch einen senkrecht zur Kurbelwellenachse von der Zugstange 9 und den Spannbacken 5 ausgeübten Druck fest mit dem Werkstück-Spindelstock 2 oder dem Reitstock 13 verbindbar ist. Ein axialer Druck auf die Kurbelwelle 15 durch Zusammenwirken von Reitstock 13 und Werkstück-Spindelstock 2 wird nicht oder nur in einem Umfang ausgeübt, der erheblich unter dem Axialdruck bei bekannten Einspannungen von Schleifvorrichtungen liegt. Dabei kann der axiale Druck dadurch vermindert werden, daß die Pinole des Reitstockes 13 drucklos gemacht wird.

Die Spannbacken 5 sind vorzugsweise bezüglich des Umfanges symmetrisch um jeweils 120° bezüglich ihrer Mitte versetzt angeordnet. Die Spitze bzw. das Führungsende 21 des Werkstück-Spindelstockes 2 bzw. des Reitstockes 13 ist so ausgebildet, daß sie bzw. es sich zwischen zwei benachbarte Spannbacken 5 in die mittige Bohrung 22 des jeweiligen Endes der Kurbelwelle 15 erstreckt.

Das Werkstück ist mit einem definierten leichten axialen Zug eingespannt. Es ist die schwimmende Lagerung der Zugstange 9 beschrieben; dabei dienen die Spannbacken 5 zum radialen Ergreifen der Kurbelwelle 15, und die radiale Führung beim Einführen der Spitze in die mittige Bohrung der Kurbelwelle 15 wird von der Spitze und der mittigen Bohrung in der Kurbelwelle 15 an einem gefasten Übergangsbereich zwischen axialer Endstirnfläche der Kurbelwelle 15 und mittiger Bohrung, der zu der Kegelkontur (z.B. 60°) der Spitze korrespondiert, übernommen; mit anderen Worten übernehmen die Spitze und der Kegelstumpf die zentrische Führung der Kurbelwelle 15.

Bei der in Fig. 3 dargestellten Ausführungsform besteht das Spannelement aus einer Spannkugel 6, die in die Spitze 3 eingebördelt ist. Kugel 6 und Zugstange 9 mit dem kegelstumpfförmigen Kopf 10 wirken dabei in gleicher Weise zusammen wie Spannbacken und Zugstange bei der an Hand von Fig. 2 beschriebenen ersten Ausführungsform.

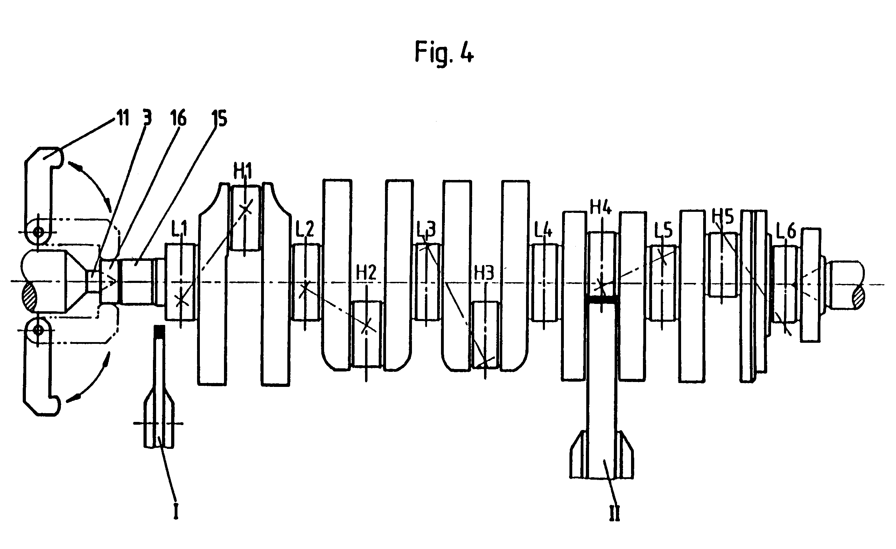

Bei der in Fig. 4 dargestellten Ansführungsform weist die Vorrichtung ein Befestigungselement 11 auf, das als ein externes Spannfutter ausgeführt ist, das auf das spindelstockseitige Ende 16 der Kurbelwelle 15 drückbar ist. Für das reitstockseitige Ende 17 der Kurbelwelle 15 (Fig. 1) kann ebenfalls ein externes Spannfutter vorgesehen sein. Das auf die Kurbelwelle aufgepreßte Spannfutter 11 unterstützt die axialdruckfreie Lagerung bzw. die Lagerung bei definiertem axialen leichten Zug und Fixierung der Kurbelwelle 15, weil es die Kurbelwelle 15 auf die entsprechende Spitze zieht. Das Spannfutter 11 ist in der Form zweier Spannbacken vorgesehen, schwenkbar gelagert und ermöglicht, beispielsweise in der in Fig. 4 dargestellten vertikalen von der Spannposition wegbewegten Position, das Schleifen der Kurbelwelle 15 auch an ihrem spindelstockseitigen Ende 16, das bei anderen Arbeitsschritten des Schleifvorgangs durch das Spannfutter 11 abgedeckt ist.

Wie in Fig. 4 gezeigt ist, werden zum Beschleifen der Kurbelwellenflächen zwei verschiedene, entsprechend zustellbare und konturierte Schleifscheiben I und II eingesetzt. Dabei wird die Schleifscheibe I so geführt, daß mit ihr nicht nur der zylindrische Endabschnitt der Kurbelwelle, sondern auch deren Lager L1, L6 und deren Radialflächen geschliffen werden können. Die Schleifscheibe II schleift den übrigen Bereich der Kurbelwelle, die somit in einer Aufspannung fertiggeschliffen werden kann.

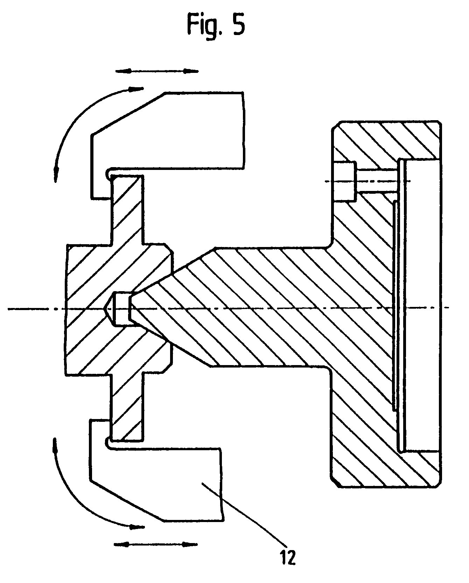

An der Kurbelwelle 15 kann an ihrem spindelstockseitigen Ende 16 bzw. an ihrem reitstockseitigen Ende 17 ein weiteres Befestigungselement 12 angeordnet sein. Bei der in Fig. 5 dargestellten Ausführungsform der erfindungsgemäßen Vorrichtung ist dieses an einem Flansch der Kurbelwelle 15 angeordnet. Die Befestigungsvorrichtung bzw. das Befestigungselement 12 zieht und spannt die Kurbelwelle 15 im wesentlichen axial zur Kurbelwellenachse und in Richtung auf den dem Ende der Kurbelwelle 15 benachbarten Werkstück-Spindelstock, oder wenn die Befestigungsvorrichtung 12 am reitstockseitigen Ende der Kurbelwelle 15 angeordnet ist, in Richtung des Reitstocks 13. Das Befestigungselement 12 hintergreift also den jeweiligen Endflansch der Kurbelwelle 15 und spannt diese gegen die zugeordnete Spitze 3 bzw. 14.

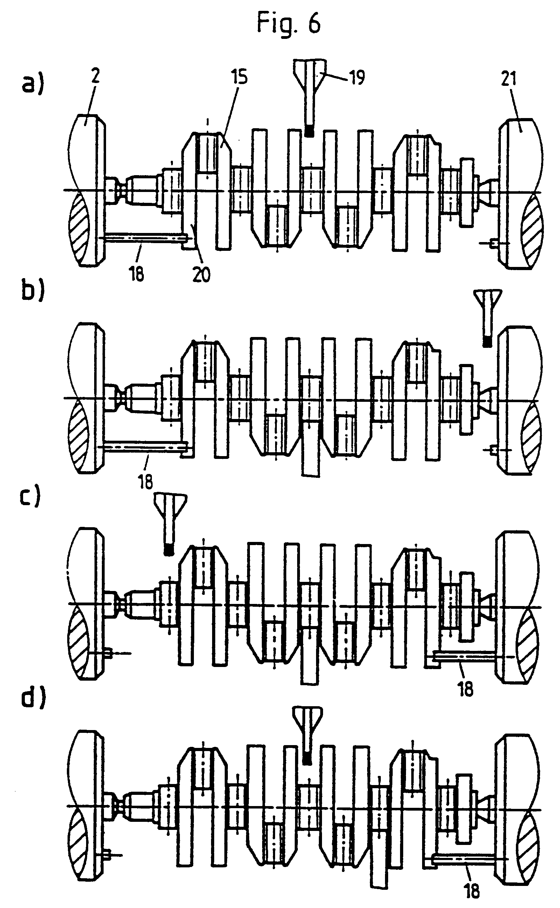

Fig. 6 zeigt die Vorrichtung in einer weiteren Ausführungsform und in Zuordnung zu einem Schleifwerkzeug 19, das an unterschiedlichen Stellen positionierbar ist Bei den in Fig. 6(a)-(-d) dargestellten Ausführungsformen verbindet jeweils ein als Stift ausgebildeter Mitnehmer 18 den Werkstück-Spindelstock 2 mit der Kurbelwelle 15 oder den Reitstock 13 mit der Kurbelwelle 15, an welcher er jeweils anliegt. Die Stifte 18 können sowohl Werkstück-Spindelstock 2 und Kurbelwelle 15 als auch Kurbelwelle 15 und Reitstock 13 verbinden. Die Stifte 18 sind horizontal, parallel zur Kurbelwellenachse verschiebbar Die Stifte 18 sind in Abhängigkeit von der jeweiligen Positionierung des Schleifwerkzeugs 19 einsetzbar. Insbesondere wird bei einer Positionierung des Schleifwerkzeugs 19 am reitstockseitigen Ende der Kurbelwelle der Stift 18 zwischen Werkstück-Spindelstock 2 und Kurbelwelle 15 ausgefahren (Fig. 6b). Bei einer Positionierung des Schleifwerkzeugs 19 am spindelstockseitigen Ende der Kurbelwelle 15 wird dagegen ein Stift 18 zwischen Kurbelwelle 15 und Reitstock 13 eingesetzt (Fig. 6c). Diese Stifte 18 ergreifen die Kurbelwelle 15 an deren Kurbelwangen, an denen sie anliegen. Als Stifte 18 können auch Bauteile eingesetzt werden, die formschlüssig an den Kurbelwangen der Kurbelwelle 15 angreifen und dann, wenn in diesem Bereich die Kurbelwelle zu schleifen ist, wegschwenkbar sind.

Schließlich sei hervorgehoben, daß es mit dem angegebenen Verfahren erstmals möglich ist, insbesondere eine Kurbelwelle in aufeinanderfolgenden Schritten komplett in der gleichen Aufspannung des Werkstückes unter Verwendung der erforderlichen Schleifscheiben und ohne auf die Kurbelwelle einwirkende axiale Druckkräfte auf ein und derselben Schleifmaschine fertigzuschleifen. Hieraus ergibt sich eine beträchtliche Senkung der Fertigungskosten sowie eine erhebliche Steigerung der Genauigkeit, da das bislang erforderliche mehrmalige Ein- und Ausspannen entfällt.

## Patentansprüche

1. Verfahren zum Schleifen einer Kurbelwelle, wobei die Kurbelwelle zwischen Aufnahmespitzen des Werkstückspindel- und Reitstockes einer Schleifmaschine eingespannt wird, wobei alle Lager, Hublager und Zapfen der Kurbelwelle in einer Aufspannung fertiggeschliffen werden und wobei mindestens zwei entsprechend konturierte Schleifscheiben eingesetzt werden,
**dadurch gekennzeichnet,**
daß alle Flansche und Stirnflächen in derselben Aufspannung wie die Lager fertiggeschliffen werden und daß die Kurbelwelle mit axialem Zug eingespannt wird.

2. Vorrichtung zum Schleifen einer Kurbelwelle, wobei die Vorrichtung zwei Schleifscheiben, einen Werkstück-Spindelstock (2) und einen Reitstock (13) mit jeweils einem in Verlängerung der Kurbelwellenachse angeordneten Lager für die Aufnahme der Kurbelwelle (15) in ihren axialen Endpunkten (16, 17) aufweist und wobei zur zentrischen Lagerung der Kurbelwelle der Werkstück-Spindelstock (2) und der Reitstock (13) je eine Spitze aufweisen, die in eine Zentrierbohrung an jedem Ende der Kurbelwelle eingreifen, dadurch gekennzeichnet, daß zum Durchführen des Verfahrens nach Anspruch 1 eine Vorrichtung vorgesehen ist, mittels welcher die Kurbelwelle (15) zwischen Werkstück-Spindelstock (2) und Reitstock (13) mit axialem Zug einspannbar ist, wodurch die Kurbelwelle axial druckfrei in den Lagern aufnehmbar ist.

3. Vorrichtung nach Anspruch 2, dadurch gekennzeichnet, daß zumindest die Spitze (3) des Werkstückspindelstockes (2) eine sich axial erstreckende Bohrung aufweist, in welcher unter Einwirkung einer axial in der Spitze verschiebbaren Schubstange (9) ein gegen die Innenwandung der Zentrierbohrung der Kurbelwelle (15), diese axial gegen die Spitze ziehend, drückendes Spannelement (4) angeordnet ist.

4. Vorrichtung nach Anspruch 3, dadurch gekennzeichnet, daß als Spannelement Spannbacken (5) angeordnet sind.

5. Vorrichtung nach Anspruch 3, dadurch gekennzeichnet, daß als Spannelement Spannkugeln (6) vorgesehen sind.

6. Vorrichtung nach einem der Ansprüche 3 bis 5, dadurch gekennzeichnet, daß die Zugstange (9) im Bereich des Spannelements (6) einen konischen Endabschnitt aufweist.

7. Vorrichtung nach Anspruch 2, dadurch gekennzeichnet, daß zwischen Werkstück-Spindelstock (2) und Kurbelweile (15) und/oder zwischen Reitstock (13) und Kurbelwelle (15) parallel zur Kurbelwellenachse die Kurbelwelle (15) und den Werkstück-Spindelstock (2) und/oder die Kurbelwelle (15) und den Reitstock (13) verbindende Mitnehmer (18) angeordnet sind.

8. Vorrichtung nach Anspruch 7, dadurch gekennzeichnet, daß die Mitnehmer (18) axial verschiebbar sind.

9. Vorrichtung nach Anspruch 7 oder 8, dadurch gekennzeichnet, daß die Mitnehmer (18) als Stifte oder als formschlüssige Mitnehmer ausgeführt sind.

10. Vorrichtung nach Anspruch 2, dadurch gekennzeichnet, daß am spindelstockseitigen Ende (16) und/oder am reitstockseitigen Ende (17) der Kurbelwelle (15) ein gegen ihre eingespannten Enden senkrecht zur Kurbelwellenachse drückendes Befestigungselement (11, 12) angeordnet ist.

11. Vorrichtung nach Anspruch 10, dadurch gekennzeichnet, daß das Befestigungselement (11), welches das Ende (16) der Kurbelwelle (15) umgreift und sie axial gegen die Spitze (3) zieht, als schwenkbare Spannbacken ausgebildet ist.

12. Vorrichtung nach Anspruch 10, dadurch gekennzeichnet, daß die Vorrichtung, die die Kurbelwelle mit axialem Zug einspannt, ein Befestigungselement (12) in Form mindestens zweier schwenkbarer Spannbacken ist, welche am spindelstockseitigen Ende (16) und/oder an ihrem reitstockseitigen Ende (17) der Kurbelwelle im wesentlichen parallel zur Kurbelwellenachse und in Richtung auf den dem jeweiligen Ende (16, 17) der Kurbelwelle (15) benachbarten Werkstück-Spindelstock (2) oder Reitstock (13) hin angreift und den jeweiligen Endflansch der Kurbelwelle (15) hintergreift und letztere gegen die zugeordnete Spitze (3, 14) spannt.

## Claims

1. A method for grinding a crankshaft, for which the crankshaft is clamped between accommodating spikes of the workpiece headstock and tailstock of a grinding machine, the grinding of all bearings, lifting bearings, and flanges of the crankshaft being completed in one clamping and at least two grinding disks, appropriately contoured, being used, characterized in that the grinding of all flanges and surfaces is completed in the same clamping in which the grinding of the bearings is completed, and in that the crankshaft is clamped with axial tension.

2. An apparatus for grinding a crankshaft, the apparatus comprising two grinding discs, a workpiece headstock (2) and a tailstock (13) with, in each case, a bearing, which is disposed in an extension of the crankshaft axis and is intended to accommodate the crankshaft (15) at its axial endpoints (16, 17), and wherein for the centrical mounting of the crankshaft the workpiece headstock (2) and tailstock (13) each have a spike, which engage a centering borehole at each end of the crankshaft, characterized in that for carrying out the method of claim 1 an apparatus is provided, which clamps the crankshaft (15) with axial tension between the workpiece headstock (2) and tailstock (13), whereby the crankshaft (15) is accommodated in the bearings without axial pressure.

3. The apparatus of claim 2, characterized in that at least the spike (3) of the workpiece headstock (2) has an axially extending borehole, in which, under the action of a connecting rod (9) that can be shifted axially in the spike, a clamping element (4) is disposed, which presses against the inner wall of the centering borehole of the crankshaft (15), pulling the latter axially against the spike.

4. The apparatus of claim 3, characterized in that clamping jaws (5) are disposed as clamping element.

5. The apparatus of claim 3, characterized in that clamping balls (6) are disposed as clamping element.

6. The apparatus of one of the claims 3 to 5, characterized in that the connecting rod (9) has a conical end section in the region of the clamping element (6).

7. The apparatus of claim 2, characterized in that catches (18), connecting the crankshaft (15) and the workpiece headstock (2) and/or the crankshaft (15) and the tailstock (13), are disposed between the workpiece headstock (2) and the crankshaft (15) and/or between the tailstock (13) and the crankshaft (15) parallel to the crankshaft axis.

8. The apparatus of claim 7, characterized in that the catches (18) can be shifted axially.

9. The apparatus of claim 7 or 8, characterized in that the catches (18) are constructed as pins or as positively fitting catches.

10. The apparatus of claim 2, characterized in that a fastening element (11), pressing perpendicular to the crankshaft axis against the clamped ends of the crankshaft (15), is disposed at the headstock end (16) and /or the tailstock end (17) of the crankshaft (15).

11. The apparatus of claim 10, characterized in that the fastening element (11), which encompasses the end (16) of the crankshaft (15) and pulls it axially against the spike (3), is constructed as a pivotable clamping jaw.

12. The apparatus of claim 10, characterized in that the apparatus, which clamps the crankshaft with axial tension, is a fastening element (12) in the form of at least two pivotable clamping jaws, which engages the headstock end (16) and/or the tailstock end (17) of the crankshaft essentially parallel to the crankshaft axis and in the direction of the workpiece headstock (2) or tailstock (13) adjacent to the respective end (16, 17) of the crankshaft (15) and grips behind the respective end Range of the crankshaft (15) and clamps the latter against the assigned spike (3, 14).

## Revendications

1. Procédé pour rectifier un vilebrequin, le vilebrequin étant serré entre des pointes de prise de la broche pour pièces à usiner et la contrepoupée d'une machine à rectifier, tous les coussinets coussinets de levage et maneton du vilebrequin étant rectifiés complètement en une fois et au moins deux meules contourées correspondantes sont utilisées,
caractérisé en ce que
toutes les brides et faces frontales sont rectifiées en même temps que les coussinets, et en ce que le vilebrequin est serré avec une traction axiale.

2. Dispositif pour rectifier un vilebrequin, le dispositif comprenant deux meules, une broche pour pièces à usiner (2) et une contrepoupée (13) ayant respectivement un coussinet disposé dans le prolongement de l'axe du vilebrequin pour le logement du vilebrequin (15) dans ses points d'extrémité axiaux (16, 17), la broche pour pièces à usiner (2) et la contrepoupée (13) comprenant chacune une pointe pour le logement central du vilebrequin s'insérant dans un alésage de centrage à chaque extrémité du vilebrequin,
caractérisé en ce que
il est prévu un dispositif pour l'exécution du procédé selon la revendication 1 par l'intermédiaire duquel le vilebrequin (15) peut être serré entre la broche pour pièces à usiner (2) et la contrepoupée (13) avec une traction axiale, pour que le vilebrequin puisse être logé dans les coussinets d'une façon axiale sans pression.

3. Dispositif selon la revendication 2, caractérisé en ce qu'au moins la pointe (3) de la broche pour pièces à usiner (2) comprend un alésage s'étendant axialement, dans lequel est disposé un tendeur (4) pressant contre la paroi intérieure de l'alésage de centrage du vilebrequin (15) tout en tirant celui-ci axialement vers la pointe sous l'action d'une bielle (9) axialement déplaçable dans la pointe.

4. Dispositif selon la revendication 3, caractérisé en ce que des mâchoires de serrage (5) sont disposées en tant que tendeurs.

5. Dispositif selon la revendication 3, caractérisé en ce que des billes de tension (6) sont prévues en tant que tendeurs.

6. Dispositif selon une des revendications 3 à 5, caractérisé en ce que la tige de traction (9) comporte dans la zone du tendeur (6) une partie d'extrémité conique.

7. Dispositif selon la revendication 2, caractérisé en ce que des tenonts d'entraînement (18) reliant le vilebrequin (15) et la broche pour pièces à usiner (2) et/ou le vilebrequin (15) et la contrepoupée (13) sont positionnés entre la broche pour pièces à usiner (2) et le vilebrequin et/ou entre la contrepoupée (13) et le vilebrequin (15) parallèlement à l'axe du vilebrequin.

8. Dispositif selon la revendication 7, caractérisé en ce que les tenonts d'entraînement (18) peuvent être déplacés axialement.

9. Dispositif selon la revendication 7 ou 8, caractérisé en ce que les tenonts d'entraînement (18) sont réalisés en tant que broches ou tenonts d'entraînement à engagement positif.

10. Dispositif selon la revendication 2, caractérisé en ce qu'à l'extrémité (16) du côté de la broche pour pièces à usiner et/ou à l'extrémité (18) du côté contrepoupée du vilebrequin (15) un élément de fixation (11, 12) est positionné, poussant perpendiculairement à l'axe du vilebrequin contre ses extrémités serrées.

11. Dispositif selon la revendication 10, caractérisé en ce que l'élément de fixation (11) entourant l'extrémité (16) du vilebrequin (15) et le tirant axialement contre la pointe (3) présente la forme de mâchoires de serrage pivotantes.

12. Dispositif selon la revendication 10, caractérisé en ce que le dispositif serrant le vilebrequin avec une traction axiale est un élément de fixation (12) ayant la forme d'au moins deux mâchoires de serrage pivotantes s'engageant à l'extrémité (16) côté de la broche pour pièces à usiner et/ou à son extrémité (17) côté contrepoupée du vilebrequin essentiellement parallèlement à l'axe de vilebrequin et en direction de la broche pour pièces à usiner (2) ou de la contrepoupée (13) au voisinage de l'extrémité (16, 17) respective du vilebrequin (15), et s'engageant derrière le flasque d'extrémité respectif du vilebrequin (15) et serrant ce dernier contre la pointe (3, 14) associée.
